# EUROPEAN PATENT APPLICATION

(11) **EP 1 398 136 A1**
(43) Date of publication of application: **17.03.2004**
(21) Application number: 03380201.8
(22) Date of filing: 15.09.2003
(51) Int. Cl.: B29C 63/10, B05C 17/02

(54) **Procedure for the manufacture of paint rollers comprised of a polyolefin core covered with a pilose fabric**

(30) Priority: 16.09.2002 ES 200202122
(71) Applicant: Nespoli Engineering Kereskedelmi Korlatolt Felelossegu Tarsasag, known in trade as Nespoli Engineering Trade L.L.C., 1146 Budapest (HU)
(72) Inventor: Nespoli, Alessandro, 08005 Barcelona (ES)
(74) Representative: Lanza Murciano, Marino Manuel

(57) **Abstract**

Improvements made in Patent No. 200101500 related to a procedure for the manufacture of paint rollers comprised of a polyolefin core covered with a pile fabric consisting of tubular bodies (11) similar in length made of polyolefins which are held in place by means of supports (6) in the form of cylindrical bodies which may or may not be hollow, there being a mechanism (3) at one end of the machine (30) which generates a lengthwise shifting and spiral rotational movement, incorporating a heat source (4) which softens the surface of the tubular body (11) incorporating a mechanism (5) which generates the spiral rolling of a fabric cover on the tubular body softened on the outside.

## Description

### OBJECT OF THE INVENTION

The present descriptive account is related to an application for an Added Patent corresponding to improvements made in Patent No. 200101500 related to a procedure for the manufacture of paint rollers comprised of a polyolefin core covered in a pile fabric, the end purpose of which lies in the fact that the tube, during the application of heat underneath the heating point and the winding of the fabric is not is not threaded on a metal mandrel as in the main Patent, therefore being configured as a totally continuous manufacturing procedure and the covering being provided continuously with the tube crossing over the point generating heat and the station or fabric placement part on the extended tube.

The tube is threaded on the machine from one side to the other at an appropriate distance so that the fabric is extended covering the tube without any break in the winding.

In short, this invention is based on the fact that the tube per se, during the heat application stage and during the fabric winding stage, is not threaded directly on a mental mandrel, as is the case in the main Patent, but is rather a matter of a continuous procedure which makes it possible to thread the tubes through the heat and the station or stage where the fabric is placed on the tube proper made of plastic material, allowing the tubes to move one after the other at an appropriate distance so that the band of fabric can go from one tube to the other without there being any halt in the fabric winding or covering stage.

The invention entails the fact of propelling the tubes on which the fabric covering is being joined in a travelling and, at the same time, a rotating movement for the purpose of achieving a spiral movement of the tube along its center line.

The invention in question is equipped with an element equipped to make the cut of the fabric covering applied onto the body made of plastic material once the dimensions thereof have exceeded the cutting area, allowing the tube which is being covered in following to continue in its removal process manually or mechanically, the tube continuing in its lengthwise travelling movement and, at the same time, a rotating movement as related to the center line of the tube up to this cutting moment, which results in a spiral movement, which facilitates the application of the fabric covering.

### FIELD OF THE INVENTION

This invention is applicable within the industry dealing in the manufacture of paint rollers.

### BACKGROUND OF THE INVENTION

The applicant has no knowledge as to the current existence of any invention which is of the characteristics described in this descriptive account.

The applicant is aware of the existence of some Patents or Utility Models for which application has been filed under the name of Biancamaria, Alvarez-García, Newell and Sekart.

The Patents for which application has been filed under the name of Newell and under the name of Sekart are quite similar, given that they employ strips of polypropylene for manufacturing the tube, its process being continuous.

The Patent for which application has been filed under the name of Biancamaria employs the tube fabricated in line by means of an extruder with rotating drawplate, and the tube turns on its center line as it is extruded, consequently moving along with a spiral movement, being a continuous process.

The Patent for which application has been filed under the name of Alvarez-Garcia employs a pre-extruded tube and is not configured as a continuous process.

It would be desirable to avail of a Patent such as that which is described in the present descriptive account, characterized due to the fact that, although pre-extruded tubes are employed, the process is continuous, which is possible thanks to the fact that the tubes are not threaded on a mandrel, contrary to the case of the aforementioned Patents which employ polypropylene strips, such as is the case of the aforesaid Newell and Sekart Patents, in which the mandrel serves as a "mold" in order to be able to appropriately shape the strips which are progressively rolled and as cooling.

In the Patent for which application has been made under the name of Alvarez-Garcia, the mandrel serves to support the tube and is responsible for the rotating movement of the tube, also effecting the fact that the tube, during the heat-application phase, instead of losing its shape, remains rigid thanks to the action of the cooling device inside the mandrel, although no mention is made thereof in the aforesaid Patent.

In the Patent for which application has been filed under the name of Biancamaria, the mandrel serves to support the tube, being responsible for the circular component of the spiral movement, and serves the purpose of cooling or rather solidifying the tube.

The Patent for which application has been filed under the name of Biancamaria is currently in the public domain and employs heat to join the fabric, just the same as that of Newell patent and that of Alvarez-García, whilst the Patent for which application has been filed under the name of Sekart employs fused polypropylene.

It would be desirable, precisely as has previously been stated, to avail of a Patent such as that which is described in this descriptive account, which employs heat, a characteristic currently in the public domain, and which, nevertheless, does not employ any type of mandrel, this characteristic of not employing any type of mandrel being the innovative element, given that it affords the possibility of converting the process into a continuous process, increasing the manufacturing capacity.

The fact of not employing any type of mandrel is possible due to the heat being applied more violently in this process, in other words, it is applied directly onto the body of the cylinder which is going to receive on the tube surface the body of the fabric material, achieving that the tube surface liquefies or at least dissolves partially without the inside, in other words, the area comprising the cylinder, located on the interior, losing its consistency or rigidity, which leads to no type of cooling means whatsoever being involved.

Therefore, the invention described in this descriptive account is, in terms of the fact that all is a consequence of a new method for configuring paint rollers, in accordance with the application of heat in a completely different manner.

### DESCRIPTION OF THE INVENTION

The improvements made in Patent Number 200101500 related to a procedure for the manufacture of paint rollers comprised of a polyolefin core covered with a pile fabric which the invention proposes has a mechanisms which pushes the tube across the heating point and, at the same time, the fabric-applying station, propelling a spiral movement along the entire center line of the tube, which facilitates the movement of the hollow tubular body without the need of an supporting mandrel whatsoever on the inside thereof.

Both the mechanisms for the lengthwise thrusting and rotational movement of the cylindrical body made of plastic material and hollow inside, which is covered in fabric material by way of the action of the heating point, as well as the guiding of the fabric and the cutting element, are located on the frame of the machine.

The aforementioned movements can obviously be achieved by way of several different embodiments.

In short, the invention in question entails a mechanism which thrusts the tube which will subsequently be used as a nexus for covering the fabric through the heat source and, at the same time, through the fabric-applying area proper, the tubular body to which the fabric is applied moving spirally on its center line.

The invention likewise has a mechanism which removes the tube duly covered in the fabric from the area in which the heat-generating element is located and from the area where the fabric is applied to the tube surface duly heated by the effect of the heat. This mechanism, like the aforementioned ones, ensures a travelling and rotating movement of the tube, always in the same direction, along its entire center line.

It must be said that both the heat-generating mechanism and the fabric guide are affixed to the frame of the machine.

The invention is equipped with a cutting mechanism which automatically makes the cut of the fabric covering when the hollow tubular body reaches a point in its travelling movement which requires being separated from the tube moving along behind it which is undergoing the same application.

Afterward, the tubular bodies covered in fabric material will be put through the pertinent cutting operations in accordance with the paint roller bodies which are required.

### DESCRIPTION OF THE DRAWINGS

In order to complete the description which is being provided and for the purpose of aiding toward a better comprehension of the characteristics of the invention, a set of drawings is attached to the present descriptive account as an integral part thereof, showing, on an illustrative and non-limiting basis, the following:
Fig. 1 provides a simplified view of the object of the invention corresponding to the improvements made in Patent Number 200101500 related to a procedure for the manufacture of paint rollers comprised of a polyolefin core covered in a pile fabric.
Fig. 2 shows one possible embodiment of the mechanisms responsible for the movement of the tubular bodies along their entire center lines.
Fig. 3 shows a second embodiment of the devices shown in Fig. 2.
Fig. 4 is a front and side view of a third embodiment of the objects shown in Figs. 2 and 3.
Fig. 5 is, once again, a fourth embodiment of the objects shown in Figs. 2, 3 and 4.
Fig. 6 shows two possible embodiments of the guides affixed to the machine frame.

### PREFERRED EMBODIMENT OF THE INVENTION

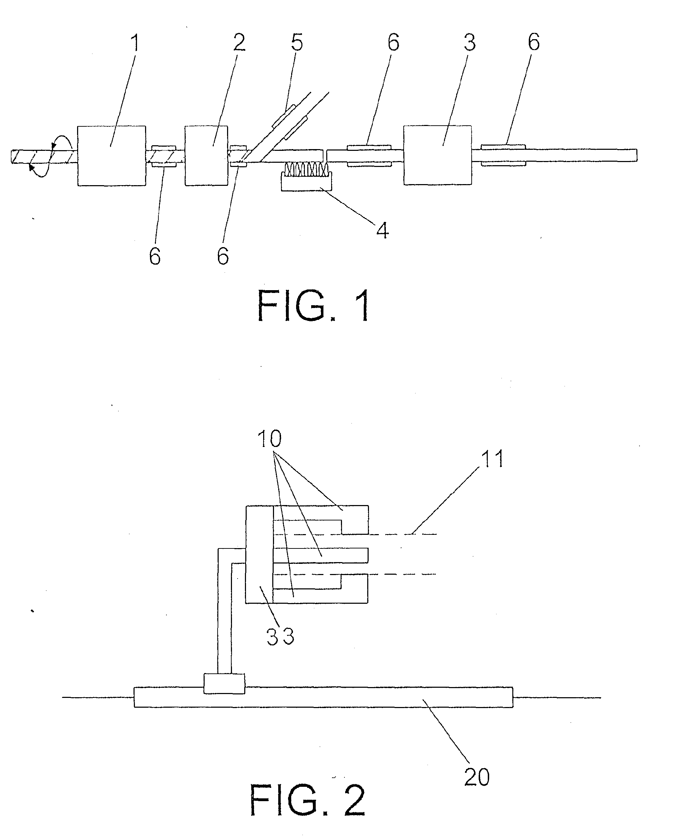

Following Fig. 1, it can be seen how the mechanisms (1) and (3) are those responsible for the spiral movement of the tubular bodies along their entire center lines, it necessarily being said that mechanism (1) must be affixed to the frame of the machine and placed following the cutting device (2) in relation to the moving direction in which the tubes travel.

Device (3) must be placed prior to the fabric-covering station (5) and affixed to the machine frame, it being taken into account that mechanisms (1) and (3) must not be spaced further than one tube length apart, it being necessary for all of the tubes put through the process to be of one same length.

The spiral movement is ensured by devices (1) and (3), determining a perfect winding of the strip of fabric, so that the edges of the successive spirals are touching those of the following spiral without overlapping with one another.

According to Fig. 2, the possibility is shown of mechanisms (1) and (3) being comprised of some claws (10) which hold the tube (11) by its starting or final end, revolving on its axis, the circular component determining the spiral movement of the tube, considering that this invention performs the holding in place of the tube (11) along the outside so that the tube is used continuously up to its separation with the similar element which is incorporated into the manufacturing line.

These claws (10), equipped with fingers actuated by mechanisms, are capable of holding both the tube which reaches the mechanism (1) as well as that which is thrust by the mechanism (3), and are affixed to the base (33) such that they turn on their own axis.

The travelling component is set into motion by the moving of the assembly which turns on a guide (20) affixed to the machine frame.

The length of the guides (20) must make it possible for the process to be performed continuously without halting, and this mechanism will obviously drag the tube (11) in the case of using some claws (10) as a mechanism (1), or will thrust it in the case of being used as mechanism (3).

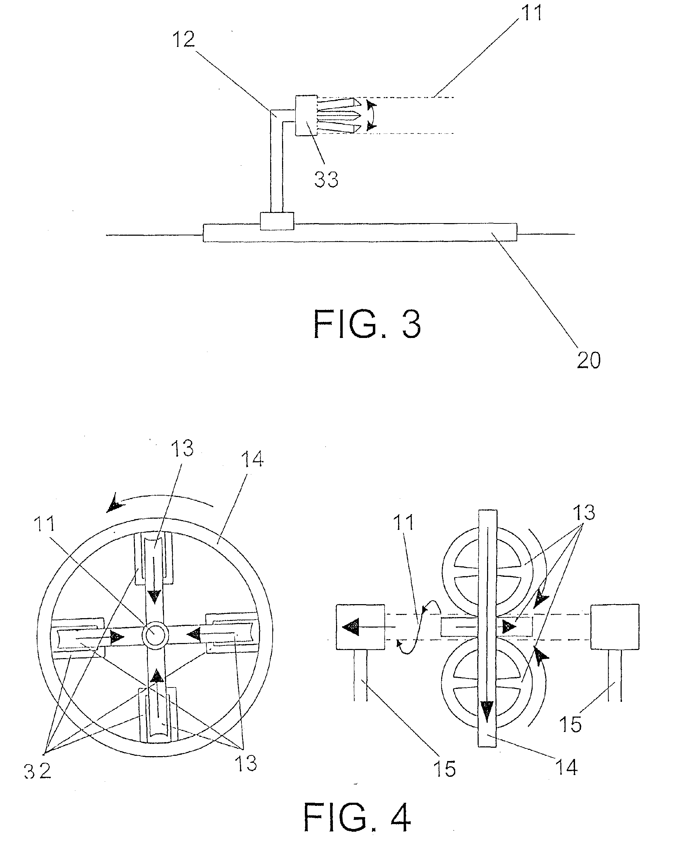

In Fig. 3, another embodiment is shown of mechanisms (1) and (3) responsible for the spiral movement of the tubular bodies, showing a similar functioning identical to that which is shown in Fig. 2, the only difference being that the claws (12) hold the tube on its inside.

The mechanism shown in Figs. 2 and 3 will solely work if they are located facing the tube end (11) .

In Fig. 4, another embodiment of the invention in question is shown corresponding to mechanisms (1) and (3) responsible for the spiral movement of the tubular bodies, in which the tube (11) is shown moved by working wheels (13) and (14), it necessarily being said that the wheels (13) are located on the inside of the circular body (14) at a 90°-angle to the inside area of the wheel (14), consequently being configured as four internal wheels (13) which make contact with the outside of the tube, turning such that they propel the tube in a travelling movement, while the wheel (14), which incorporates the four wheels (13) supported on the guide-supports (32) which are located in the area on the inside of the circular body constituting the wheels positioning the elements, turns on its own axis and is in charge of the rotating movement of the tubular body configured as a tube (11) supported by guide-supports (15).

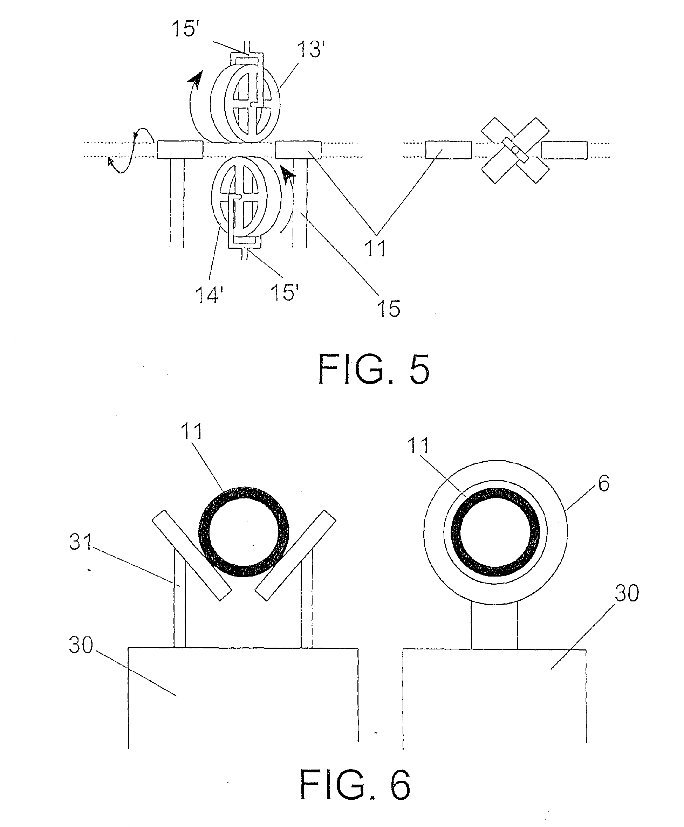

Fig. 5 shows another embodiment of the mechanisms (1) and (3) responsible for the movement of the tubular bodies, in which the two wheels (13') and (14'), affixed to the frame of the machine by means of guide-supports (15'), are slanted appropriately to the tube center line, turning in a direction such as to generate the moving of the tube (11) .

Again, in following with Fig. 1, a heat source (4) is seen to exist, which can be substituted by an extruder of the same polyolefin of which the tube (11) is comprised.

Number (2) shows the cutting device, located following the station (5), where the covered tubes are appropriately cut to their original length, in the area where the end and beginning of the tubes which have been put in one after the other to be covered coincide.

This cutting device (2), affixed to the machine frame, is placed after winding station (5) and prior to mechanism (1).

This placement can be achieved solely if the cutting device (2) is located prior to the movement mechanism (1) according to the direction in which the tube moves.

As has previously been stated, the invention in question is equipped with a mechanism (5) for winding the fabric around the outside of the tube (11), allowing for the winding in accordance with the existing spiral movement on the tube (11) along its entire center line, which must logically be located after the heat-generating element (4) or similar mechanism in relation to the direction in which the tube moves.

The guides affixed to the machine frame are indicated by number (6) and are structured so as to allow the other elements to operate.

Fig. 6 shows a front view of the support mechanisms (6) comprising the guides which may be configured into two slanted parts over which the tubular body (11) moves, or in the form of hollow cylinder through which the tubular body (11) also moves.

Fig. 1 again shows the tube (11) entering into the machine (30) through the side where the movement mechanism (3) is located, and the tube may be put into the machine manually or automatically.

On the mechanism (3) which generates the movement of the tube (11) being set into motion, the tube travels lengthwise in a spiral movement, and the tube (11) moves past the device used for generating heat (4) or for similar purposes and is subsequently subjected to the action of the mechanism (5) for the winding of the fabric covering, this being an action which is performed along the entire length of the tube (11) up to the point of losing contact with the movement device (3), it necessarily being said that prior to its losing contact with the device (3), the device (1) is already touching the starting end of the tube (11) and therefore the covering of the tubular body can continue, given that the device (1) becomes responsible for the spiral movement which continues ensuring a proper winding.

In following, a second tube is threaded into the process following the first tube (11), so that the space between the first and the second tube (11) is very small, affording the possibility of the winding operation not being interrupted in accordance with the actuation of the mechanisms (4) and (5), achieving a continuous process.

Device (2), that is to say, the cutting device, functions when the first tube (11) is already fully covered or wound with the fabric material, and the space between the ends of the two tubular bodies (11) are located exactly in front of the cutting mechanism (2).

Following the cutting operation, when the movement mechanism (1) stops functioning, the tube exits the process.
Said movement device (1), before the second tube loses contact with the device (3), ensures that there will be no interruption in the spiral movement of said tube, providing the process with continuity.

## Claims

1. Improvements made in Patent Number 200101500 related to a process for the manufacture of paint rollers comprised of a polyolefin core covered in a pile fabric, **characterized** due to being comprised of tubular bodies (11) similar in length made from polyolefins which are held in place by means of supports (6), preferably configured by two slanted parts through which the tubular body (11) moves or as hollow cylindrical bodies, there being a mechanism (3) at one end of the machine (30) which generates a lengthwise travelling movement and rotating movement along the center line of the tube (11), resulting in a spiral movement, incorporating a heat source (4) which softens the surface of the tubular body (11), as well as a mechanism (5) which generates the spiral winding of a fabric covering on the tubular body softened on its outside (11), the tubular body (11) subsequently being set into motion by a mechanism (1) located on the opposite end of the machine (30) to which mechanism (3) is located, and incorporating a cutting mechanism (2) which cuts the existing fabric covering crosswise between the adjacent ends of two tubular bodies.

2. Improvements made in Patent Number 200101500 related to a process for the manufacture of paint rollers comprised of a polyolefin core covered in a pile fabric as per Claim 1, **characterized** due to the actuating mechanism (1) beginning to function prior to the end of the length of the tube (11) actuated by the movement mechanism (3), it being possible for the tubes (11) to be placed into the supports (6) manually or automatically.

3. Improvements made in Patent Number 200101500 related to a process for the manufacture of paint rollers comprised of a polyolefin core covered in a pile fabric as per Claim 1, **characterized** due to it being possible for the heat-generating mechanism (4) to be substituted for a polyolefin extruder.

4. Improvements made in Patent Number 200101500 related to a process for the manufacture of paint rollers comprised of a polyolefin core covered in a pile fabric as per Claim 1, **characterized** due to it being possible for the traction mechanisms (1) and (3) to be comprised of some claws (10) which fit around the outside of the tube, or by some claws (12) which fit inside the tube (11), which turn on their own axis for the purpose of moving the tubular body (11) spirally along its entire center line up to its removal through the area opposite the feed-in area.

5. Improvements made in Patent Number 200101500 related to a process for the manufacture of paint rollers comprised of a polyolefin core covered in a pile fabric as per Claim 1, **characterized** due to it being possible for the mechanisms (1) and (3) to be alternatively substituted by working wheels (13) located inside the circular body (14) which come into contact with the outside surface of the tube, or by wheels (13'' and (14'' appropriately slanted to the center line of the tube (11) so that they will provide spiral movement.
